(19) **Europäisches Patentamt / European Patent Office / Office européen des brevets**

(11) **EP 2 224 286 B1**

(12) **EUROPEAN PATENT SPECIFICATION**

(45) Date of publication and mention of the grant of the patent:
**14.12.2016 Bulletin 2016/50**

(51) Int Cl.:
***G03B 15/05*** *(2006.01)*     ***H04N 5/225*** *(2006.01)*

(21) Application number: **09153796.9**

(22) Date of filing: **26.02.2009**

(54) **Method of driving a flash device and a number of loads powered by a battery and handheld electronic device including the same**

Verfahren zum Betreiben einer Flashvorrichtung und einer Zahl von Lasten, die von einer Batterie betrieben werden und tragbare elektronische Vorrichtung damit

Procédé de commande de dispositif flash et du nombre de charges alimentées par une batterie et dispositif électronique portable l'incluant

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**01.09.2010 Bulletin 2010/35**

(73) Proprietor: **BlackBerry Limited
Waterloo, ON N2K 0A7 (CA)**

(72) Inventor: **Geris, Ryan A.
Waterloo, Ontario N2L 3W8 (CA)**

(74) Representative: **Fennell, Gareth Charles et al
Kilburn & Strode LLP
20 Red Lion Street
London WC1R 4PJ (GB)**

(56) References cited:
WO-A-2004/029642     JP-A- 11 282 064
JP-A- 2006 058 482     US-A- 5 352 968
US-A1- 2008 014 997     US-A1- 2008 037 979
US-A1- 2008 129 219     US-A1- 2008 164 847

**Description**

BACKGROUND

Field

The disclosed and claimed concept relates generally to handheld electronic devices and, more particularly, to handheld electronic devices including a flash device and a battery. The disclosed and claimed concept also relates to methods of driving a flash device of a handheld electronic device including a battery.

Description of the Related Art

Numerous types of handheld electronic devices are known. Examples of such handheld electronic devices include, for instance, personal data assistants (PDAs), handheld computers, two-way pagers, cellular telephones, e-mail devices and the like. Such handheld electronic devices are generally intended to be portable and thus are small and battery powered. While some handheld electronic devices include a wireless communication capability, other handheld electronic devices are standalone devices that do not communicate with other devices.

Some handheld electronic devices include a camera and a light emitting diode (LED) camera flash, and are powered by a single lithium ion battery. The current drawn from operating the LED camera flash is relatively very large (e.g., without limitation, up to about 1.2 A; any suitable value) for a relatively long period of time (e.g., without limitation, up to about 80 mS; up to about 250 mS; any suitable value) and can easily brown-out the device under certain conditions. Brown-out is also known as battery droop and means that the battery voltage drops to a level that can impair the operation of other device functions, possibly even causing the device to reset. A lithium ion battery's ability to maintain its voltage is dependent upon various factors, such as the age of the battery and its temperature (i.e., the equivalent series resistance (ESR) of the battery varies with these parameters). For example, when the battery voltage is low or if the battery is cold, then the battery ESR may be too high to support a camera flash. In such cases, the battery droop may trip battery supervisory circuits, causing the device to reset or go into a sleep mode. This can be a frustrating experience for the user.

U.S. Patent Application Pub. No. 2008/0037979 discloses in its Background section that one approach to try and address the problem of battery droop is to map known levels of battery capacity and voltage into tables that are associated with events that should occur at those battery capacity levels. This can be an effective approach for components that draw relatively small or steady amounts of power. However, for a flash or other high-intensity component, a large margin of battery reserve is needed as the momentary conditions of a battery that can withstand such a high-intensity burst can vary.

Publication 2008/0037979 further discloses an electronic device in which the battery level is measured, a determination is made if the battery level exceeds a predetermined threshold, and, if not, then a flash photograph is not permitted. Otherwise, if the battery level exceeds the predetermined threshold, then flash settings are adjusted to reduce power consumption by the flash so as to not cause a supervisory circuit to shut down the device. The exact settings for the flash can be chosen so as to maximize the amount of light output from the flash, but without tripping the supervisor circuit. Numerous profiles or representations thereof can be gathered for different start voltages of the battery and different ambient temperatures. An average version of the profiles can be established by determining profiles for a number of substantially identical copies of the device, so that variability, between devices can be ascertained and considered when establishing profiles.

U.S. Patent Application Pub. No. 2008/0014997 discloses a battery-powered communications device including a slump monitoring system, which monitors the battery voltage. The slump monitoring system determines if the monitored value is below a predetermined threshold. The predetermined threshold may be a dynamic parameter that depends on the transmit power level required for a given transmission. If the value is below the predetermined threshold, then the slump monitoring system sends an interrupt signal to terminate the transmission, which causes a transmitter to be powered down. If the monitored value is above the predetermined threshold, then the slump monitoring system continues to monitor. The slump monitoring system can include an analog to digital converter (ADC), a trigger input, a trigger delay, one or more analog inputs, a control/math block, and one or more outputs. The one or more analog inputs receive one or more signals related to battery voltage level or temperature and provide these signals to the ADC.

Some prior proposals use a pre-flash function to determine the ESR of the battery. U.S. Patent Application Pub. No. 2008/0164847 discloses a method and apparatus for maintaining a maximum sustained flash current over the whole length of a flash using a programmable current drive in a handheld portable device powered by a battery. The method measures the battery voltage before and after a flash is initiated and calculates the ESR of the battery, without using temperature data and age of the battery. The calculated ESR is then used to adjust the flash current. The process is repeated to correct for errors in the flash current.

In some prior proposals, since most of the factors that affect brown-out are not generally known to the user at the time of system operation (e.g., age of the battery; current temperature; size of the system load and flash load), a worst case voltage droop is assumed when a decision is made whether to activate the flash, if brown-out is to be avoided. However, assuming the worst case severely limits the usefulness of the flash (i.e., the flash won't trigger sometimes, even though the system could probably sustain a flash pulse) since the LED flash current drawn from the battery is calculated to be higher than it really is.

There is room for improvement in handheld electronic devices including a flash device and a battery.

There is also room for improvement in methods of driving a flash device of a handheld electronic device including a battery.

The invention is set out in the independent claims, with some optional features set out in the claims dependent thereto.

BRIEF DESCRIPTION OF THE DRAWINGS

A full understanding of the disclosed and claimed concept can be gained from the following description of the preferred embodiments when read in conjunction with the accompanying drawings in which:

Figure 1 is a block diagram of a handheld electronic device in accordance with embodiments of the disclosed and claimed concept.
Figure 2 is a flowchart of a method of driving a flash device of a handheld electronic device in accordance with other embodiments of the disclosed and claimed concept.
Figure 3 is a block diagram of a handheld electronic device in accordance with another embodiment of the disclosed and claimed concept.
Figure 4 is a flowchart of a routine of the processor of Figure 3.
Figure 5 is a block diagram of a handheld electronic device in accordance with another embodiment of the disclosed and claimed concept.

Similar numerals refer to similar parts throughout the specification.

DESCRIPTION

As employed herein, the term "number" shall mean one or an integer greater than one (i.e., a plurality).

As employed herein, the term "processor" means a programmable analog and/or digital device that can store, retrieve, and process data; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the term "current load" includes, for example and without limitation, a number of handheld electronic device current loads; a number of relatively high current loads such as, for example and without limitation, a 2G radio; a 3G radio; a CDMA (Code-Division Multiple Access) radio; a UMTA radio; a WLAN radio; a HSDPA radio; a GSM (global system for mobile communications) radio; a WIFI radio; a UMTS (Universal Mobile Telecommunications System) radio; GSM Evolution (EDGE) radio; Enhanced GPRS (EGPRS) radio; IMT Single Carrier (IMT-SC) radio; 3GPP LTE (Long Term Evolution) radio; any circuit or sub-system that can draw current over a suitable "heavy current load" threshold (e.g., without limitation, about 500 mA; any suitable value), any, some or all of which could occur during a flash.

Since a flash (e.g., without limitation, LED flash) draws a relatively large current and a number of other subsystems of a handheld electronic device can draw more current, there is a need for a method and apparatus to determine the desired total current from the battery and, then, determine the desired (e.g., without limitation, maximum) operating current of the LED flash. There is a need to limit the LED flash current to such a desired value, without resetting or turning off the device, while considering various potential high current loads. A method and apparatus is desired that can more accurately estimate the desired maximum flash current that is sustainable during a flash without having to use worst case assumptions.

The present invention is set out in the independent claims, with some optional features set out in the claims dependent thereto.

The method may further comprise determining a plurality of the plurality of different voltage values from Vmin(Ibat) = Vlow-sys + Ibat*ESR(T); employing Ibat as a possible current from the battery corresponding to a number of the number of loads powered by the battery; employing ESR(T) from a look-up table of equivalent series resistance of the battery versus temperature operatively associated with the battery; and employing Vlow-sys as a voltage at which the handheld electronic device will reset or shutdown.

The method may further comprise employing a current sensor to provide a sensed current from the current flowing from the battery; and determining the corresponding one of the plurality of different voltage values from the sensed current and from the plurality of the plurality of different voltage values.

In accordance with another aspect of the disclosed and claimed concept, a handheld electronic device comprises: a processor; a battery having a voltage; a flash device including a flash current; a number of loads powered by the battery; and a flash driver structured to output the flash current to the flash device, wherein the processor is structured to determine a temperature operatively associated with the battery, determine a plurality of different voltage values corresponding to a plurality of different combinations of the number of loads as a function of the determined temperature, and start the flash device at a predetermined value of the flash current, and wherein the flash driver is structured to select a corresponding one of the plurality of different voltage values as a function of: (a) a determined number of the number of loads which are active, or (b) a current flowing from the battery; determine the voltage of the battery, and if the voltage of the battery is less than or equal to the corresponding one of the plurality of different voltage values, then reduce the flash current below the predetermined value of the flash current until the voltage of the battery is greater than the corresponding one of the plurality of different voltage values.

In accordance with another aspect of the disclosed and claimed concept, a method drives a flash device of a handheld electronic device including a number of loads powered by a battery having a voltage and a current flowing from the battery, the flash device includes a flash current. The method comprises: determining an equivalent series resistance (ESR) of the battery; determining a plurality of different voltage values corresponding to the equivalent series resistance (ESR) and a plurality of different possible currents flowing from the battery; starting the flash device at a predetermined value of the flash current; sensing the current flowing from the battery; selecting a corresponding one of the plurality of different voltage values as a function of the sensed current; determining the voltage of the battery; and if the voltage of the battery is less than or equal to the corresponding one of the plurality of different voltage values, then reducing the flash current below the predetermined value of the flash current until the voltage of the battery is greater than the corresponding one of the plurality of different voltage values.

In accordance with another aspect of the disclosed and claimed concept, a handheld electronic device comprises: a processor; a battery having a voltage; a flash device including a flash current; a number of loads powered by the battery; and a flash driver structured to output the flash current to the flash device, wherein the processor is structured to determine an equivalent series resistance (ESR) of the battery, determine a plurality of different voltage values corresponding to the equivalent series resistance (ESR) and a plurality of different possible currents flowing from the battery, and start the flash device at a predetermined value of the flash current, and wherein the flash driver is structured to sense the current flowing from the battery, select a corresponding one of the plurality of different voltage values as a function of the sensed current, determine the voltage of the battery, and if the voltage of the battery is less than or equal to the corresponding one of the plurality of different voltage values, then reduce the flash current below the predetermined value of the flash current until the voltage of the battery is greater than the corresponding one of the plurality of different voltage values.

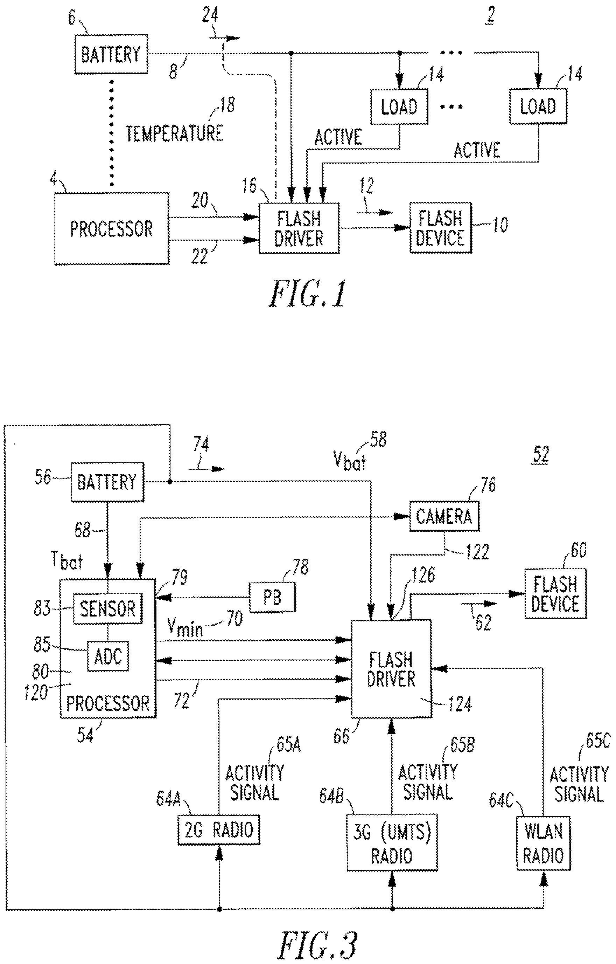

Referring to Figure 1, a handheld electronic device 2 includes a processor 4, a battery 6 having a voltage 8, a flash device 10 including a flash current 12, a number of loads 14 powered by the battery 6, and a flash driver 16 structured to output the flash current 12 to the flash device 10. The processor 4 is structured to determine a temperature 18 (e.g., without limitation, a battery temperature (e.g., without limitation, internal, external, or proximate a battery); ambient temperature; device temperature) operatively associated with the battery 6, determine a plurality of different voltage values 20 corresponding to a plurality of different combinations of the number of loads 14 as a function of the determined temperature, and start, at 22, the flash device 10 at a predetermined value of the flash current 12. The different voltage values 20 may be saved to the flash driver 16 or a suitable memory element. The flash driver 16 is structured to select a corresponding one of the different voltage values 20 as a function of: (a) a determined number of the number of loads 14 which are active, or (b) a current 24 flowing from the battery. The flash driver 16 is further structured to determine the voltage 8 of the battery 6, and if the battery voltage 8 is less than or equal to the corresponding one of the different voltage values 20, then reduce the flash current 12 below the predetermined value of the flash current until the battery voltage 8 is greater than the corresponding one of the different voltage values 20.

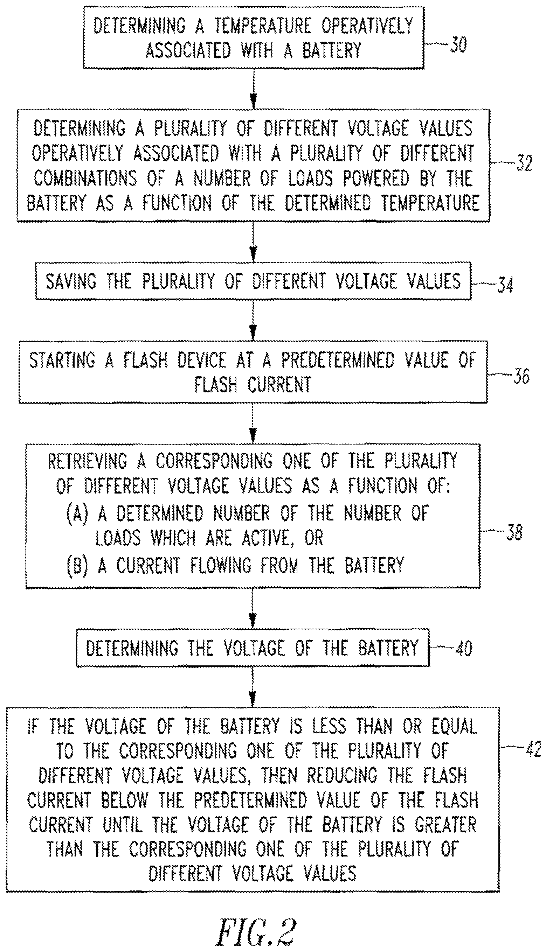

Figure 2 illustrates a method of driving a flash device (e.g., without limitation, the flash device 10 of Figure 1) of a handheld electronic device including a number of loads powered by a battery having a voltage. The method includes determining, at 30, a temperature operatively associated with the battery. At 32, a plurality of different voltage values corresponding to a plurality of different combinations of the number of loads are determined as a function of the determined temperature. The plurality of different voltage values may be saved in a memory element, at 34. At 36, the flash device is started at a predetermined value of flash current of the flash device. At 38, a corresponding one of the plurality of different voltage values is selected as a function of: (a) a determined number of the number of loads which are active, or (b) a current flowing from the battery. At 40, the voltage of the battery is determined along with whether the voltage of the battery is less than or equal to the corresponding one of the plurality of different voltage values. Then, at 42, the flash current is reduced below the predetermined value of the flash current until the voltage of the battery is greater than the corresponding one of the plurality of different voltage values.

While example elements are shown in Figures 1 and 2, the disclosed concept is not limited to those example elements.

Example 1

Another example of a handheld electronic device 52 is shown in Figure 3. Somewhat similar to the handheld electronic device 2 of Figure 1, the device 52 includes a processor 54, a battery 56 having a voltage 58 (Vbat), a flash device 60 including a flash current 62, a plurality of different radios 64,64B,64C powered by the battery 56, and a flash driver 66 structured to output the flash current 62 to the flash device 60. The processor 54 is structured to determine a temperature 68 (Tbat) (e.g., without limitation, ambient temperature; battery temperature (e.g., without limitation, internal, external or proximate a battery); device temperature) operatively associated with the battery 56, determine a plurality of different voltage values 70 (Vmin) corresponding to a plurality of different combinations of the plurality of different radios 64,64B,64C as a function of the determined temperature, and start, at 72, the flash device 50 at a predetermined value of the flash current 62. The different voltage values 70 can be saved to the flash driver 66, as shown, or to any suitable memory element (e.g., without limitation, of the processor 54; of the flash driver 66) of the device 52.

The flash driver 66 is structured to select a corresponding one of the different voltage values 70 as a function of: (a) a determined number of the plurality of different radios 64,64B,64C, which are active as indicated by activity signals 65A,65B,65C, respectively, or (b) a current 74 flowing from the battery 56. The flash driver 66 is further structured to determine the voltage 58 of the battery 56, and if the battery voltage 58 is less than or equal to the corresponding one of the different voltage values 70, then reduce the flash current 62 below the predetermined value of the flash current until the battery voltage 58 is greater than the corresponding one of the different voltage values 70.

For convenience, the disclosed and claimed concept is described as applied to an example flash device 60, which can be an LED flash section, although any suitable flash device for a handheld electronic device can be employed. The flash device 60 is preferably used together with a camera 76 and a pushbutton (PB) 78, as will be described, below, in connection with Example 2.

It will be appreciated that the example handheld electronic device 52 could also include one or more of a suitable input apparatus (not shown), a suitable output apparatus (not shown), a microphone (not shown), a speaker (not shown), and a display (not shown).

Example 2

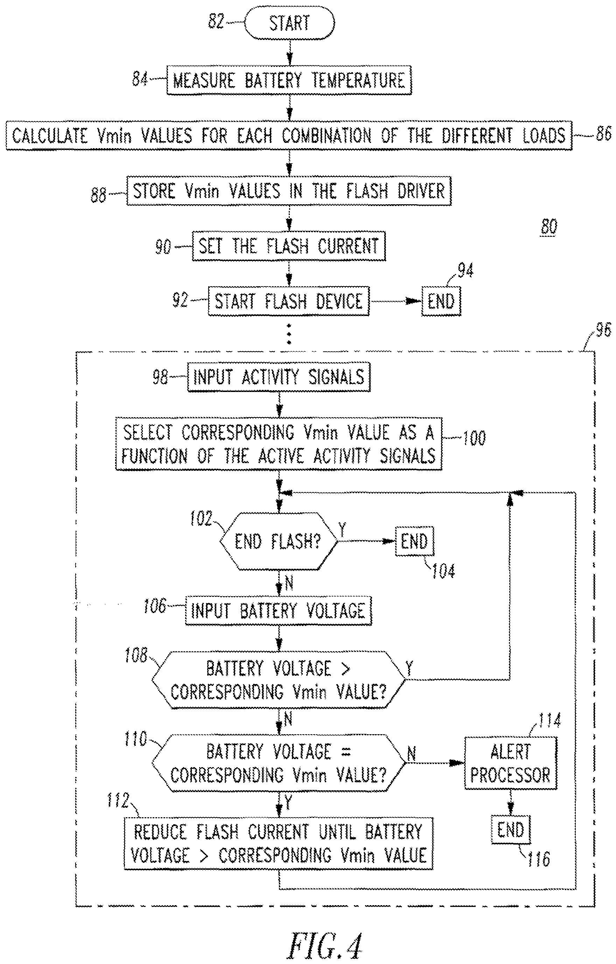

Figure 4 illustrates an example routine 80 of the processor 54 of Figure 3. After starting, at 82, the processor 54 determines the battery temperature (Tbat) 68 using a suitable temperature sensor 83 operatively associated with (e.g., without limitation, a component internal to (as shown in Figure 3) a processor; a component on or external to (not shown) a processor; a distinct component (not shown); a component internal to, on or external to (not shown) a battery powering a processor) the processor 54. Next, at 86, the processor 54 calculates Vmin values 70 for each combination of the different radios 64A,64B,64C (e.g., none, any one, any two or all three of the example radios being potentially active as can be indicated by the corresponding activity signals 65A,65B,65C, respectively). Then, at 88, the processor 54 stores the Vmin values 70 in the flash driver 66, and, at 90, sets a predetermined value in the flash driver 66 for the initial flash current 62. Finally, the processor 54 starts the flash device 60 by sending a start signal 72 to the flash driver 66, before the routine 80 ends, at 94.

The start signal 72 initiates a suitable hardware and/or software flash driver process 96 in the flash driver 66. First, at 98, the flash driver 66 inputs the activity signals 65A,65B,65C. Next, at 100, the flash driver 66 selects a corresponding one of the Vmin values 70 as a function of the active activity signals 65A,65B,65C. Then, at 102, it is determined if the flash driver process 96 has ended, and, if so, the process 96 ends at 104. Otherwise, at 106, the flash driver 66 inputs the battery voltage 58 and, at 108, determines if the battery voltage 58 is greater than the selected corresponding one of the Vmin values 70 from 100. If so, then step 102 is repeated. Otherwise, at 110, the flash driver 66 determines if the battery voltage 58 is equal to the selected corresponding one of the Vmin values 70 from 100. If so, then the flash driver 66 reduces the flash current 62 (e.g., by a suitable current value; by a suitable percentage) until the battery voltage 58 is greater than the selected corresponding one of the Vmin values 70 from 100, as will be described. Then, steps 102, 106, 108, 110 and 112 can be repeated, as needed, to accomplish this goal. On the other hand, if the battery voltage 58 is not equal to the selected corresponding one of the Vmin values 70 from 100, then it is less than that value and, thus, the flash driver 66 stops the flash device 60 and alerts (e.g., without limitation, provides a digital input to; interrupts) the processor 54, at 114, before ending, at 116.

The example routine 80 starts, for example, when a user presses the camera shutter pushbutton 78 of the camera 76 under suitable low light conditions. The processor 54 includes an input 79 structured to receive a camera shutter signal from the camera pushbutton 78 and responsively start the routine 80. Hence, the routine 80 of Figure 4 is run in response to a user pressing the button 78 to take a picture with the camera 76 after the processor 54 or other suitable circuit determines that the flash from the flash device 60 is needed.

Example 3

The example flash driver 66 is a hardware circuit external to (e.g., separate from) the processor 54. This hardware circuit is controlled by the example processor routine 80, which determines a number of the Vmin values 70 and stores those number of values in the flash driver 66.
Alternatively, the flash driver 66 can be contained in a suitable microcomputer and/or as part of a processor.

Example 4

An example of the calculation of one of the Vmin values 70 (Figure 3) is shown in Equation 1, below. The temperature (e.g., T = Tbat 68) is determined and a look-up table 120 is employed to determine the ESR(T) of the battery 56.

$$Vmin = Vlow\text{-}sys + I(hl)*ESR(T)$$

$$(Eq.\ 1)$$

wherein:

T is a temperature operatively associated with the battery 56 (e.g., without limitation, ambient temperature; battery temperature (e.g., without limitation, internal, external, or proximate a battery); device temperature);
Vlow-sys is the voltage at which the handheld electronic device 52 will reset or shutdown;
I(hl) is the sum of the different current loads (e.g., without limitation, heavy current loads; loads of the example radios 64A,64B,64C) that could occur during a flash after the starting the flash device 60; and
ESR(T) is the look-up table value for the ESR of the battery 56 based on the temperature (T).

Example 5

For example, the temperature sensor 83 of Figure 3 is operatively associated with (e.g., without limitation, internal, external, or proximate a battery; sensing ambient temperature near a battery; sensing temperature of a device which uses a battery) the battery 56 to determine the temperature (Tbat) 68 operatively associated with the battery 56 and output a corresponding analog signal. The processor 54 includes an analog to digital converter (ADC) 85 structured to input the analog signal and output a digital value corresponding to the battery temperature (That) 68.

Example 6

At 90 of Figure 4, the processor 54 initially programs the flash driver 66 for the desired maximum flash current (e.g., without limitation, about 900 mA) and starts the camera 76. Then, the camera 76 sends a signal 122 to the flash driver 66 to start the flash device 60, in order that it is suitably synchronized with the camera 76. In this example, the flash driver 66 inputs a number of: (a) the different voltage values 70 from the processor 54; (b) the predetermined desired maximum flash current value from the processor 54; and (c) the synchronization signal 122 from the camera 76.

Example 7

Before, during or after the flash by the flash device 60, there can be any suitable number of loads (e.g., without limitation, "heavy current loads") active at one time. As a non-limiting example, in the disclosed handheld electronic device 52, there can be up to about three (as shown by the example radios 64A,64B,64C) or four (not shown) "heavy current loads" active at one time, although the disclosed and claimed concept is applicable to any suitable larger or smaller number of "heavy current loads", any suitable larger or smaller number of loads, or any suitable battery current drawn from the battery 56 by the handheld electronic device 52.

Example 8

In the example routine 80 Figure 4, the flash driver 66 automatically reduces the flash current 62 if the selected corresponding one of the Vmin values 70 from 100 is reached. However, if the flash driver 66 determines that Vbat 58 is less than the selected corresponding Vmin value 70, then the flash driver 66 stops the flash device 60 and sends a suitable warning or interrupt, at 114, to the processor 54.

Example 9

The battery 56 or the processor 54 employs a suitable sensor 83 (e.g., without limitation, a silicon diode; a gallium arsenide diode; any suitable active or passive temperature determining, measuring or sensing device (e.g., RTDs (resistive temperature detectors), various metals (e.g., copper, nickel, platinum) having resistance, voltage or current characteristics versus temperature); any suitable temperature sensor) to determine the battery temperature (Tbat) 68 in combination with the ADC 85 of the processor 54 or of an associated Power Management IC (PMIC) (not shown). Alternatively, the sensor 83 and/or the ADC 85 can be employed at any suitable location in the device 52.

Example 10

The example flash driver 66 preferably includes a suitable circuit 124 for comparing the selected corresponding one of the Vmin values 70 from 100 of Figure 4 to the battery voltage (Vbat) 58 (e.g., without limitation, a suitable processor having an ADC; a suitable comparator). For example, in an example hardware circuit embodiment of the example flash driver 66, the circuit 124 is a comparator circuit structured to compare the battery voltage (Vbat) 58 with the selected corresponding Vmin value 70.

Example 11

At 102 of Figure 4, the removal of the synchronization signal 122 from the camera 76 can be employed by the flash driver 66 at input 126 to end the flash from the flash device 60. Preferably, the flash driver 66 includes a suitable timer (e.g., a time out function) to alternatively end the flash after a predetermined time period after the flash device 60 is started responsive to the activation of the synchronization signal 122 from the camera 76.

Example 12

There can be, for example and without limitation, one "high current load" or several (e.g., without limitation, two, three, four or more) "high current loads" that all can occur at the same time and either before, during or after the flash from the flash device 60. Figures 3 and 4 show that the processor 54 initially calculates a Vmin value 70 for each high current load combination and stores the various Vmin values 70 in the flash driver 66. During the flash, the flash driver 66 determines which number of the various "high current loads" are active based upon a number of corresponding activity signals 65A,65B,65C. Based upon the number of corresponding activity signals 65A,65B,65C that are active, the corresponding one of the Vmin values 70 is selected at 100 of Figure 4.
For example, if there are three example "high current loads" A, B and C, then the processor 54 calculates and stores an example eight (= $2^3$) Vmin values 70 for: (1) none of A, B and C active; (2) only A active; (3) only B active; (4) only A and B active; (5) only C active; (6) only A and C active; (7) only B and C active; and (8) all of A, B and C active. Then, based upon the activity signals 65A,65B,65C, the flash driver 66 selects the proper one of the Vmin values 70.

Example 13

In known flash drivers, if a relatively high current load occurs during a flash, then this could adversely impact the battery voltage. To prevent this, the disclosed flash driver 66 monitors a number of relatively high current loads 64A,64B,64C during the flash using, for example, the activity signals 65A,65B,65C. If a relatively high current load occurs during the flash, then a different corresponding Vmin value 70 is compared to the battery voltage 58. Various Vmin values 70 for a number of combinations of one, some or all of the various possible loads are calculated by the processor 54 before the flash and are stored by the flash driver 66. Then, after the flash device 60 is started, the flash driver 66 repetitively repeats determining the battery voltage (Vbat) 58 and repetitively repeats reducing the flash current 62 if the battery voltage (Vbat) 58 is less than or equal to the selected corresponding one of the Vmin values 70 from 100 of Figure 4. This continues until the flash driver 66 stops the flash device 60.

Example 14

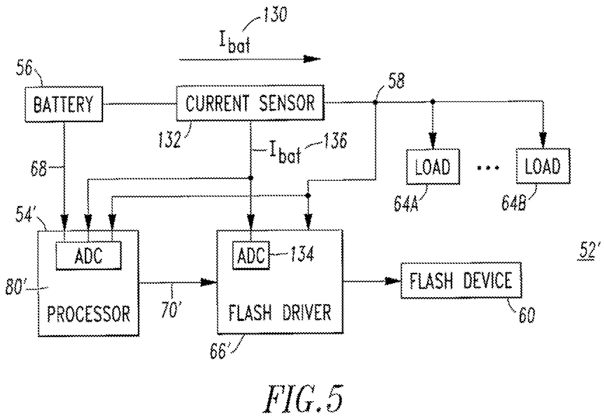

An alternative embodiment of a handheld electronic device 52', which is somewhat similar to the handheld electronic device 52 of Figure 3, is shown in Figure 5. Here, a processor 54' includes a routine 80', which, prior to the flash from the flash device 60, determines an array of a plurality of Vmin(I(hl)) values 70' from Equation 2.

$$Vmin(I(hl)) = Vlow\text{-}sys + I(hl)*ESR$$

$$(Eq. 2)$$

wherein:

I(hl) is a possible battery current which can include a number of different fixed and variable current loads 64A,64B (e.g., without limitation, heavy current loads; radios) that could occur, if active, during a flash from the flash device 60; ESR is either Vbat/Ibat, or ESR(T) of Equation 1; and Vmin(I(hl)) is an array of Vmin values 70' as a function of I(hl) prior to the flash; the flash driver 66' can access this array using, for example, I(hl) = Ibat 136 of Figure 5 as the index.

During the flash, the flash driver 66' uses, for example, a suitable current sensor 132 (e.g., without limitation, a suitable series resistor (R)) and ADC 134 to provide a sensed current from the battery current (Ibat) 130 flowing from the battery 56. The example current sensor embodiment determines the voltage (Vr) across a resistor (R), in order to determine the present battery current, Ibat 130 (e.g., using sensed Ibat 136 = Vr/R). In turn, the flash driver 66' selects the corresponding Vmin value 70' from the array Vmin(I(hl)) using the sensed Ibat 136 value, after which the battery voltage Vbat 58 is compared to the selected Vmin value 70' in a manner similar to that discussed above in connection with Figures 3 and 4. This example provides a relatively more accurate determination of the battery load and, thus, a relatively more accurate selection of the suitable corresponding Vmin value 70'.

Example 15

Although examples have been disclosed of selecting a corresponding one of a plurality of different voltage values as a function of: (a) a determined number of loads 14 which are active, and (b) a current 24 flowing from a battery, it will be appreciated that one or both of these functions can be employed. As a non-lifniting example, after a number of loads 14 which are active is determined, that number can be confirmed using the current 24 flowing from the battery. As another non-limiting example, after the current 24 flowing from the battery is determined, that current can be confirmed by determining the number of loads 14 which are active.

The disclosed and claimed concept does not calculate the ESR of the battery 56 during the flash. Instead, before the flash, various minimum voltage (Vmin or threshold) values 70 for combinations of any number of the various high current loads 64A,64B,64C are calculated by the processor 54 and stored in the flash driver 66. After this occurs, relatively few calculations are performed by the flash driver 66 during the flash, which can be performed, for example, by a relatively simple hardware circuit. Hence, this reduces or preferably minimizes the calculations done by the processor 54 during the flash.

The disclosed and claimed concept uses, for example, a programmable current drive controlled by the processor 54. This can be applied to any handheld electronic device having a flash, usually in connection with a camera, such as 76.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

**Claims**

1. A method of driving a flash device (10) of a handheld electronic device (2) including a number of loads (14) powered by a battery (6) having a voltage (8), said flash device including a flash current (12), said method comprising:

   determining (30) a temperature (18) operatively associated with said battery;
   determining (32), before starting said flash device, a plurality of different voltage values (20) corresponding to a plurality of different combinations of said number of loads as a function of said determined temperature;
   starting (36) said flash device at a predetermined value of said flash current and, during operation of the flash device:

      selecting (38) a corresponding one of the plurality of different voltage values as a function of: (a) a determined number of said number of loads which are active, or (b) a current (24) flowing from said battery;

determining (40) the voltage of said battery;

comparing the voltage of said battery with said corresponding one of said plurality of different voltage values;

if the voltage of said battery is less than or equal to said corresponding one of said plurality of different voltage values, then reducing (42) said flash current below the predetermined value of said flash current until the voltage of said battery is greater than said corresponding one of said plurality of different voltage values; and

after said starting said flash device, repetitively repeating (102,106,108,110,112) said determining (106) the voltage of said battery and repetitively repeating said reducing said flash current if the voltage of said battery is less than or equal to said corresponding one of said plurality of different voltage values.

2. The method of Claim 1 further comprising

determining (98) said determined number of said number of loads which are active;

selecting (38) said corresponding one of said plurality of different voltage values as the function of said determined number of said number of loads which are active;

employing T as said temperature operatively associated with said battery; determining (86) each of said plurality of different voltage values from

$$Vmin = Vlow\text{-}sys + I(hl)*ESR(T);$$

employing Vlow-sys as a voltage at which said handheld electronic device will reset or shutdown;

employing I(hl) as the sum of a plurality of different current loads that could occur after said starting said flash device; and

employing ESR(T) from a look-up table (120) of equivalent series resistance of said battery versus temperature operatively associated with said battery.

3. The method of Claim 1 further comprising

determining (110) that the voltage of said battery is less than said corresponding one of said plurality of different voltage values;

stopping (114) said flash device responsive to the voltage of said battery being less than said corresponding one of said plurality of different voltage values; and

alerting (114) said processor of said stopping.

4. The method of Claim 1 further comprising

employing as said number of loads powered by the battery at least two different loads powered by said battery;

selecting (88) at least four of said plurality of different voltage values; and after said starting said flash device, determining (98) which number of said at least two different loads are active and selecting (100) said corresponding one of said plurality of different voltage values as the function of said determined number of said number of loads which are active.

5. The method of Claim 1 further comprising

determining a plurality of said plurality of different voltage values (70') from Vmin(I(hl)) = Vlow-sys + I(hl)*ESR;

employing I(hl) as a possible current from said battery corresponding to a number of said number of loads powered by said battery;

employing ESR from: (a) a look-up table (120) of equivalent series resistance of said battery versus temperature operatively associated with said battery, or (b) the determined voltage of said battery divided by the current flowing from said battery; and

employing Vlow-sys as a voltage at which said handheld electronic device will reset or shutdown.

6. The method of Claim 6 further comprising

employing a current sensor (132) to provide a sensed current (136) from said current (130) flowing from said battery; and

determining said corresponding one of said plurality of different voltage values from said sensed current and from said plurality of said plurality of different voltage values.

7. The method of Claim 7 further comprising

comparing the voltage of said battery to said determined corresponding one of said plurality of different voltage values.

**8.** A handheld electronic device (2;52;52') comprising:

a processor (4);
a battery (6) having a voltage (8);
a flash device (10) including a flash current (12);
a number of loads (14) powered by said battery; and
a flash driver (16) structured to output said flash current to said flash device,
wherein said processor is structured (83) to determine a temperature (18) operatively associated with said battery, determine (32), before starting said flash device, a plurality of different voltage values (20) corresponding to a plurality of different combinations of said number of loads as a function of said determined temperature, and start (36) said flash device at a predetermined value of said flash current,
wherein during the operation of the flash device said flash driver is structured to select (38) a corresponding one of the plurality of different voltage values as a function of: (a) a determined number of said number of loads which are active, or (b) a current (24; 130) flowing from said battery; determine (40) the voltage of said battery, compare the voltage of said battery with said corresponding one of said pluality of different voltage values; and if the voltage of said battery is less than or equal to said corresponding one of said plurality of different voltage values, then reduce (42) said flash current below the predetermined value of said flash current until the voltage of said battery is greater than said corresponding one of said plurality of different voltage values, and
wherein said flash driver is further structured, after said flash device is started, to repetitively repeat said determine the voltage (Vbat) of said battery and repetitively repeat said reduce said flash current if the voltage (Vbat) of said battery is less than or equal to said corresponding one of said plurality of different voltage values.

**9.** The handheld electronic device (2;52;52') of Claim 8 wherein said flash driver is further structured to said repetitively repeat said determine the voltage (Vbat) of said battery and said repetitively repeat said reduce said flash current until stopping said flash device.

**10.** The handheld electronic device (2;52;52') of Claim 8 wherein said flash driver is external to said processor; and wherein said flash driver is a hardware circuit structured to input a number of: (a) said plurality of different voltage values from said processor; (b) the predetermined value of said flash current from said processor; and (c) a synchronization signal from a camera.

**11.** The handheld electronic device (2;52;52') of Claim 8 wherein said processor is structured to save said plurality of different voltage values in said flash driver.

**12.** The handheld electronic device (52) of Claim 8 wherein said flash driver (66) comprises a comparator circuit structured to compare the voltage of said battery with said corresponding one of said plurality of different voltage values.

**13.** The handheld electronic device (52) of Claim 8 wherein said processor comprises an input (79) structured to receive a signal from a camera device (76,78); and wherein said processor is further structured to determine (30) said temperature operatively associated with said battery, determine (32) said plurality of different voltage values, and start (36) said flash device responsive to said signal from the camera device.

**Patentansprüche**

**1.** Verfahren zum Betreiben einer Blitz-Vorrichtung (10) einer tragbaren elektronischen Vorrichtung (2) beinhaltend eine Anzahl von Lasten (14), die durch eine Batterie (6) mit einer Spannung (8) betrieben werden, wobei diese Blitz-Vorrichtung einen Blitz-Strom (12) aufweist, wobei das Verfahren umfasst:

Bestimmen (30) einer Temperatur (18), die mit der Batterie verbunden ist;
Bestimmen (32), vor dem Starten dieser Blitz-Vorrichtung, einer Vielzahl von unterschiedlichen Spannungswerten (20) entsprechend einer Vielzahl unterschiedlicher Kombinationen dieser Anzahl von Lasten als Funktion der besagten bestimmten Temperatur;
Starten (36) der Blitz-Vorrichtung bei einem vorgegebenen Wert des besagten Blitz-Stroms und, während dem Betrieb der Blitz-Vorrichtung:

Auswählen (38) eines entsprechenden Spannungswerts aus der Vielzahl von unterschiedlichen Spannungswerten als Funktion von: (a) einer bestimmten Anzahl der besagten Anzahl von Lasten, die aktiv sind, oder (b) einem Strom (24), der von der besagten Batterie fließt;

Bestimmen (40) der Spannung der Batterie;
Vergleichen der Spannung der Batterie mit dem besagten entsprechenden Spannungswert aus der besagten Vielzahl von unterschiedlichen Spannungswerten;
falls die Spannung der besagten Batterie kleiner gleich dem besagten entsprechenden Spannungswert aus der besagten Vielzahl von unterschiedlichen Spannungswerten ist, Verringern (42) des besagten Blitz-Stroms unter den vorgegebenen Wert des besagten Blitz-Stroms, bis die Spannung der besagten Batterie größer als der besagte entsprechende Spannungswert der besagten Vielzahl von unterschiedlichen Spannungswerten ist; und
nach dem besagten Starten der besagten Blitz-Vorrichtung, fortwährendes Wiederholen (102, 106, 108, 110, 112) des besagten Bestimmens (106) der Spannung der besagten Batterie und fortwährendes Wiederholen des besagten Verringerns des besagten Blitz-Stroms, falls die Spannung der besagten Batterie kleiner gleich dem besagten entsprechenden Spannungswert aus der besagten Vielzahl von unterschiedlichen Spannungswerten ist.

2.  Verfahren nach Anspruch 1, ferner umfassend:

Bestimmen (98) der besagten bestimmten Anzahl der besagten Anzahl von Lasten, die aktiv sind;
Auswählen (38) des besagten entsprechenden Spannungswerts aus der besagten Vielzahl von unterschiedlichen Spannungswerten als Funktion der besagten bestimmten Anzahl der besagten Anzahl von Lasten, die aktiv sind;
Anwenden von T als besagte Temperatur, die mit der besagten Batterie verbunden ist;
Bestimmen (86) von jedem der besagten Vielzahl von unterschiedlichen Spannungswerten aus

$$Vmin = Vlow - sys + I(hl)*ESR(T);$$

Anwenden von Vlow-sys als Spannung, bei der die besagte tragbare elektronische Vorrichtung neustarten oder herunterfahren wird;
Anwenden von I(h1) als die Summe einer Vielzahl von unterschiedlichen Stromlasten, die nach dem Starten der besagten Blitz-Vorrichtung auftreten könnten; und
Anwenden von ESR (T) aus einer Nachschlagtabelle (120) von gleichwertigen Reihenwiederständen der besagten Batterie gegenüber der mit der besagten Batterie verbundenen Temperatur.

3.  Verfahren nach Anspruch 1, ferner umfassend
Bestimmen (110), dass die Spannung der besagten Batterie niedriger ist als der besagte entsprechende Spannungswert aus der besagten Vielzahl von unterschiedlichen Spannungswerten;
Stoppen (114) der besagten Blitz-Vorrichtung als Reaktion darauf, dass die Spannung der besagten Batterie niedriger ist als der besagte entsprechende Spannungswert aus der besagten Vielzahl von unterschiedlichen Spannungswerten; und
Melden (114) des besagten Stoppens an den besagten Prozessor.

4.  Verfahren nach Anspruch 1, ferner umfassend
Anwenden von zumindest zwei unterschiedlichen, durch die besagte Batterie betriebenen Lasten als die besagte Anzahl von durch die Batterie betriebenen Lasten;
Auswählen (88) von zumindest vier Spannungswerten aus der besagten Vielzahl von unterschiedlichen Spannungswerten; und
nach dem besagten Starten der besagten Blitz-Vorrichtung, Bestimmen (98), welche Anzahl der besagten zumindest zwei unterschiedlichen Lasten aktiv sind, und Auswählen (100) des besagten entsprechenden Spannungswerts aus der besagten Vielzahl von unterschiedlichen Spannungswerten als die Funktion der besagten bestimmten Anzahl der besagten Anzahl von Lasten, die aktiv sind.

5.  Verfahren nach Anspruch 1, ferner umfassend
Bestimmen einer Vielzahl der besagten Vielzahl von unterschiedlichen Spannungswerten (70') aus Vmin(I(h1)) = Vlow - sys + I(h1)*ESR;
Anwenden von I(h1) als möglicher Strom von der besagten Batterie entsprechend einer Anzahl der besagten Anzahl von durch die besagte Batterie betriebenen Lasten;

Anwenden von ESR aus: (a) einer Nachschlagtabelle (120) von gleichwertigen Reihenwiderständen der besagten Batterie gegenüber der mit der besagten Batterie verbundenen Temperatur, oder (b) der bestimmten Spannung der besagten Batterie geteilt durch den von der Batterie fließenden Strom; und

Anwenden von Vlow-sys als Spannung, bei der die besagte tragbare elektronische Vorrichtung neustarten oder herunterfahren wird.

6. Verfahren nach Anspruch 6, ferner umfassend

Anwenden eines Stromsensors (132), um eine erfasste Stromstärke (136) von dem besagten von der Batterie fließenden Strom (130) bereitzustellen; und

Bestimmen des besagten entsprechenden Spannungswerts aus der besagten Vielzahl von unterschiedlichen Spannungswerten von dem besagten erfassten Strom und von der besagten Vielzahl der besagten Vielzahl von verschiedenen Spannungswerten.

7. Verfahren nach Anspruch 7, ferner umfassend

Vergleichen der Spannung der besagten Batterie mit dem besagten bestimmten entsprechenden Spannungswert aus der besagten Vielzahl von unterschiedlichen Spannungswerten.

8. Tragbare elektronische Vorrichtung (2; 52; 52'), aufweisend:

einen Prozessor (4);
eine Batterie (6) mit einer Spannung (8);
eine Blitz-Vorrichtung (10) mit einem Blitz-Strom (12);
eine Anzahl von durch die besagte Batterie betriebenen Lasten (14); und
einen Blitz-Treiber (16), der ausgelegt ist, um den besagten Blitz-Strom an die besagte Blitz-Vorrichtung auszugeben,
wobei der besagte Prozessor ausgelegt (83) ist, um eine mit der besagten Batterie verbundene Temperatur (18) zu bestimmen, vor dem Starten der besagten Blitz-Vorrichtung eine Vielzahl von unterschiedlichen Spannungswerten (20) entsprechend einer Vielzahl von unterschiedlichen Kombinationen der besagten Anzahl von Lasten als Funktion der besagten bestimmten Temperatur zu bestimmen (32), und die besagte Blitz-Vorrichtung bei einem vorgegebenen Wert des besagten Blitz-Stroms zu starten (36),
wobei während des Betriebs der Blitz-Vorrichtung der besagte Blitz-Treiber ausgelegt ist, einen entsprechenden Spannungswert aus der Vielzahl von unterschiedlichen Spannungswerten auszuwählen (38) als eine Funktion von: (a) einer bestimmten Anzahl der besagten Anzahl von Lasten, die aktiv sind, oder (b) einem Strom (24; 130), der von der besagten Batterie fließt; die Spannung der besagten Batterie zu bestimmen (40), die Spannung der besagten Batterie mit dem besagten entsprechenden Spannungswert aus der besagten Vielzahl von unterschiedlichen Spannungswerten zu vergleichen; und falls die Spannung der besagten Batterie kleiner gleich dem besagten entsprechenden Spannungswert aus der besagten Vielzahl von unterschiedlichen Spannungswerten ist, dann den besagten Blitz-Strom unter den vorgegebenen Wert des besagten Blitz-Stroms zu verringern (42), bis die Spannung der besagten Batterie größer als der besagte entsprechende Spannungswert aus der besagten Vielzahl von unterschiedlichen Spannungswerten ist, und
wobei der besagte Blitz-Treiber ferner ausgelegt ist, nach dem Starten der besagten Blitz-Vorrichtung das besagte Bestimmen der Spannung (Vbat) der besagten Batterie fortwährend zu wiederholen und das besagte Verringern des besagten Blitz-Stroms fortwährend zu wiederholen, falls die Spannung (Vbat) der besagten Batterie kleiner gleich dem besagten entsprechenden Spannungswert aus der besagten Vielzahl von unterschiedlichen Spannungswerten ist.

9. Tragbare elektronische Vorrichtung (2; 52; 52') nach Anspruch 8, wobei der besagte Blitz-Treiber ferner zu besagtem fortwährenden Wiederholen des besagten Bestimmens der Spannung (Vbat) der besagten Batterie und zu besagtem fortwährendem Wiederholen des besagten Verringerns des besagten Blitz-Stroms bis zum Stoppen der Blitz-Vorrichtung ausgelegt ist.

10. Tragbare elektronische Vorrichtung (2; 52; 52') nach Anspruch 8, wobei der besagte Blitz-Treiber extern zu dem besagten Prozessor ist; und wobei der besagte Blitz-Treiber eine Hardware-Schaltung ist, die ausgelegt ist, eine Anzahl einzugeben von: (a) der besagten Vielzahl von unterschiedlichen Spannungswerten von dem besagten Prozessor; (b) dem vorgegebenen Wert des besagten Blitz-Stroms von dem besagten Prozessor; und (c) eines Synchronisierungssignals von einer Kamera.

11. Tragbare elektronische Vorrichtung (2; 52; 52') nach Anspruch 8, wobei der besagte Prozessor ausgelegt ist, die besagte Vielzahl von unterschiedlichen Spannungswerten in dem besagten Blitz-Treiber zu speichern.

**12.** Tragbare elektronische Vorrichtung (52) nach Anspruch 8, wobei der besagte Blitz-Treiber (66) eine Komparatorschaltung aufweist, die ausgelegt ist, die Spannung der besagten Batterie mit dem besagten entsprechenden Spannungswert aus der besagten Vielzahl von unterschiedlichen Spannungswerten zu vergleichen.

**13.** Tragbare elektronische Vorrichtung (52) nach Anspruch 8, wobei der besagte Prozessor einen Eingang (79) aufweist, der ausgelegt ist, ein Signal von einer Kameravorrichtung (76, 78) zu empfangen; und wobei der besagte Prozessor ferner ausgelegt ist, die besagte mit der besagten Batterie verbundene Temperatur zu bestimmen (30), die besagte Vielzahl von unterschiedlichen Spannungswerten zu bestimmen (32), und die besagte Blitz-Vorrichtung als Reaktion auf das besagte Signal von der Kameravorrichtung zu starten (36).

**Revendications**

**1.** Procédé d'attaque d'un dispositif flash (10) d'un dispositif électronique portable (2) comprenant un certain nombre de charges (14) alimentées par une batterie (6) présentant une tension (8), ledit dispositif flash comportant un courant flash (12), ledit procédé comportant :

la détermination (30) d'une température (18) associée de manière fonctionnelle à ladite batterie ;
la détermination (32), avant le démarrage dudit dispositif flash, d'une pluralité de différentes valeurs de tension (20) correspondant à une pluralité de différentes combinaisons dudit nombre de charges en fonction de ladite température déterminée ;
le démarrage (36) dudit dispositif flash à une valeur prédéterminée dudit courant flash et, pendant le fonctionnement du dispositif flash :

la sélection (38) d'une valeur de tension correspondante parmi la pluralité de différentes valeurs de tension en fonction : (a) d'un nombre déterminé dudit nombre de charges qui sont actives, ou (b) d'un courant (24) circulant à partir de ladite batterie ;

la détermination (40) de la tension de ladite batterie ;
la comparaison de la tension de ladite batterie à ladite valeur de tension correspondante parmi ladite pluralité de différentes valeurs de tension ;
si la tension de ladite batterie est inférieure ou égale à ladite valeur de tension correspondante parmi ladite pluralité de différentes valeurs de tension, la réduction (42) dudit courant flash au-dessous de la valeur prédéterminée dudit courant flash jusqu'à ce que la tension de ladite batterie soit supérieure à ladite valeur de tension correspondante parmi ladite pluralité de différentes valeurs de tension ; et
après ledit démarrage dudit dispositif flash, la répétition (102, 106, 108, 110, 112) de manière répétitive de ladite détermination (106) de la tension de ladite batterie et la répétition de manière répétitive de ladite réduction dudit courant flash si la tension de ladite batterie est inférieure ou égale à ladite valeur de tension correspondante parmi ladite pluralité de différentes valeurs de tension.

**2.** Procédé selon la revendication 1, comprenant en outre :

la détermination (98) dudit nombre déterminé de charges qui sont actives ;
la sélection (38) de ladite valeur de tension correspondante parmi ladite pluralité de différentes valeurs de tension en fonction dudit nombre déterminé dudit nombre de charges qui sont actives ;
l'emploi de T comme ladite température associée de manière fonctionnelle à ladite batterie ;
la détermination (86) de chaque valeur de tension parmi ladite pluralité de différentes valeurs de tension à partir de $V_{min} = V_{low\text{-}sys} + I(hl)*ESR(T)$ ;
l'emploi de $V_{low\text{-}sys}$ comme tension à laquelle ledit dispositif électronique portable sera remis à zéro ou mis à l'arrêt ;
l'emploi de $I(hl)$ comme la somme d'une pluralité de différentes charges de courant qui pourraient se produire après ledit démarrage dudit dispositif flash ; et
l'emploi de $ESR(T)$ à partir d'une table de correspondance (120) de la résistance série équivalente de ladite batterie par rapport à la température associée de manière fonctionnelle à ladite batterie.

**3.** Procédé selon la revendication 1, comprenant en outre :

la détermination (110) que la tension de ladite batterie est inférieure à ladite valeur de tension correspondante parmi ladite pluralité de différentes valeurs de tension ;

l'arrêt (114) dudit dispositif flash en réponse au fait que la tension de ladite batterie est inférieure à ladite valeur de tension correspondante parmi ladite pluralité de différentes valeurs de tension ; et

l'action consistant à alerter (114) ledit processeur dudit arrêt.

4. Procédé selon la revendication 1, comprenant en outre :

l'emploi, comme ledit nombre de charges alimentées par la batterie, d'au moins deux différentes charges alimentées par ladite batterie ;

la sélection (88) d'au moins quatre valeurs de tension parmi ladite pluralité de différentes valeurs de tension ; et

après ledit démarrage dudit dispositif flash, la détermination (98) duquel nombre desdites au moins deux différentes charges sont actives et la sélection (100) de ladite valeur de tension correspondante parmi ladite pluralité de différentes valeurs de tension en fonction dudit nombre déterminé dudit nombre de charges qui sont actives.

5. Procédé selon la revendication 1, comprenant en outre :

la détermination d'une pluralité de valeurs de tension parmi ladite pluralité de différentes valeurs de tension (70') à partir de Vmin(I(hl)) = Vlow-sys + I(hl)*ESR ;

l'emploi de I(hl) comme courant possible provenant de ladite batterie correspondant à un certain nombre dudit nombre de charges alimentées par ladite batterie ;

l'emploi de ESR à partir de : (a) une table de correspondance (120) de la résistance série équivalente de ladite batterie par rapport à la température associée de manière fonctionnelle à ladite batterie, ou (b) la tension déterminée de ladite batterie divisée par le courant circulant à partir de ladite batterie ; et

l'emploi de Vlow-sys comme tension à laquelle ledit dispositif électronique portable sera remis à zéro ou mis à l'arrêt.

6. Procédé selon la revendication 6, comprenant en outre :

l'emploi d'un capteur de courant (132) pour fournir un courant (136) détecté à partir dudit courant (130) circulant à partir de ladite batterie ; et

la détermination de ladite valeur de tension correspondante parmi ladite pluralité de différentes valeurs de tension à partir dudit courant détecté et à partir de ladite pluralité de ladite pluralité de différentes valeurs de tension.

7. Procédé selon la revendication 7, comprenant en outre :

la comparaison de la tension de ladite batterie à ladite valeur de tension correspondante déterminée parmi ladite pluralité de différentes valeurs de tension.

8. Dispositif électronique portable (2 ; 52 ; 52') comprenant :

un processeur (4) ;

une batterie (6) présentant une tension (8) ;

un dispositif flash (10) comportant un courant flash (12) ;

un certain nombre de charges (14) alimentées par ladite batterie ; et

un circuit d'attaque de flash (16) structuré pour délivrer ledit courant flash audit dispositif flash,

ledit processeur étant structuré (83) pour déterminer une température (18) associée de manière fonctionnelle à ladite batterie, pour déterminer (32), avant le démarrage dudit dispositif flash, une pluralité de différentes valeurs de tension (20) correspondant à une pluralité de différentes combinaisons dudit nombre de charges en fonction de ladite température déterminée, et pour démarrer (36) ledit dispositif flash à une valeur prédéterminée dudit courant flash,

pendant le fonctionnement du dispositif flash, ledit circuit d'attaque de flash étant structuré pour sélectionner (38) une valeur de tension correspondante parmi la pluralité de différentes valeurs de tension en fonction : (a) d'un nombre déterminé dudit nombre de charges qui sont actives, ou (b) d'un courant (24 ; 130) circulant à partir de ladite batterie ; pour déterminer (40) la tension de ladite batterie, comparer les tensions de ladite batterie à ladite valeur de tension correspondante parmi ladite pluralité de différentes valeurs de tension ; et si

EP 2 224 286 B1

la tension de ladite batterie est inférieure ou égale à ladite valeur de tension correspondante parmi ladite pluralité de différentes valeurs de tension, pour réduire (42) ledit courant flash au-dessous de la valeur prédéterminée dudit courant flash jusqu'à ce que la tension de ladite batterie soit supérieure à ladite valeur de tension correspondante parmi ladite pluralité de différentes valeurs de tension, et

ledit circuit d'attaque de flash étant structuré en outre, une fois ledit dispositif flash démarré, pour répéter de manière répétitive ladite détermination de la tension (Vbat) de ladite batterie et pour répéter de manière répétitive ladite réduction dudit courant flash si la tension (Vbat) de ladite batterie est inférieure ou égale à ladite valeur de tension correspondante parmi ladite pluralité de différentes valeurs de tension.

9. Dispositif électronique portatif (2 ; 52 ; 52') selon la revendication 8, ledit circuit d'attaque de flash étant structuré en outre pour répéter de manière répétitive ladite détermination de la tension (Vbat) de ladite batterie et pour répéter de manière répétitive ladite réduction dudit courant flash jusqu'à l'arrêt dudit dispositif flash.

10. Dispositif électronique portatif (2 ; 52 ; 52') selon la revendication 8, dans lequel ledit circuit d'attaque de flash est externe audit processeur ; et ledit circuit d'attaque de flash est un circuit matériel structuré pour entrer un nombre parmi : (a) ladite pluralité de différentes valeurs de tension provenant dudit processeur ; (b) la valeur déterminée dudit courant flash provenant dudit processeur ; et (c) un signal de synchronisation provenant d'un dispositif de prise de vue.

11. Dispositif électronique portatif (2 ; 52 ; 52') selon la revendication 8, dans lequel ledit processeur est structuré pour mettre en mémoire ladite pluralité de différentes valeurs de tension dans ledit circuit d'attaque de flash.

12. Dispositif électronique portatif (52) selon la revendication 8, dans lequel ledit circuit d'attaque de flash (66) comprend un circuit comparateur structuré pour comparer la tension de ladite batterie à ladite valeur de tension correspondante parmi ladite pluralité de différentes valeurs de tension.

13. Dispositif électronique portatif (52) selon la revendication 8, dans lequel ledit processeur comprend une entrée (79) structurée pour recevoir un signal d'un dispositif caméra (76, 78) ; et ledit processeur est structuré en outre pour déterminer (30) ladite température associée de manière fonctionnelle à ladite batterie, pour déterminer (32) ladite pluralité de différentes valeurs de tension, et pour démarrer (36) ledit dispositif flash en réponse audit signal provenant du dispositif caméra.

*FIG.1*

*FIG.3*

```
┌─────────────────────────────────────────┐
│  DETERMINING A TEMPERATURE OPERATIVELY   │──30
│     ASSOCIATED WITH A BATTERY            │
└─────────────────────────────────────────┘
                    ↓
┌─────────────────────────────────────────┐
│ DETERMINING A PLURALITY OF DIFFERENT     │
│ VOLTAGE VALUES OPERATIVELY ASSOCIATED    │──32
│ WITH A PLURALITY OF DIFFERENT            │
│ COMBINATIONS OF A NUMBER OF LOADS        │
│ POWERED BY THE BATTERY AS A FUNCTION     │
│ OF THE DETERMINED TEMPERATURE            │
└─────────────────────────────────────────┘
                    ↓
┌─────────────────────────────────────────┐
│ SAVING THE PLURALITY OF DIFFERENT        │──34
│ VOLTAGE VALUES                           │
└─────────────────────────────────────────┘
                    ↓
┌─────────────────────────────────────────┐
│ STARTING A FLASH DEVICE AT A             │──36
│ PREDETERMINED VALUE OF FLASH CURRENT     │
└─────────────────────────────────────────┘
                    ↓
┌─────────────────────────────────────────┐
│ RETRIEVING A CORRESPONDING ONE OF THE    │
│ PLURALITY OF DIFFERENT VOLTAGE VALUES    │
│ AS A FUNCTION OF:                        │
│  (A) A DETERMINED NUMBER OF THE NUMBER   │──38
│      OF LOADS WHICH ARE ACTIVE, OR       │
│  (B) A CURRENT FLOWING FROM THE BATTERY  │
└─────────────────────────────────────────┘
                    ↓
┌─────────────────────────────────────────┐
│ DETERMINING THE VOLTAGE OF THE BATTERY   │──40
└─────────────────────────────────────────┘
                    ↓
┌─────────────────────────────────────────┐
│ IF THE VOLTAGE OF THE BATTERY IS LESS    │
│ THAN OR EQUAL TO THE CORRESPONDING ONE   │
│ OF THE PLURALITY OF DIFFERENT VOLTAGE    │──42
│ VALUES, THEN REDUCING THE FLASH CURRENT  │
│ BELOW THE PREDETERMINED VALUE OF THE     │
│ FLASH CURRENT UNTIL THE VOLTAGE OF THE   │
│ BATTERY IS GREATER THAN THE              │
│ CORRESPONDING ONE OF THE PLURALITY OF    │
│ DIFFERENT VOLTAGE VALUES                 │
└─────────────────────────────────────────┘
```

*FIG.2*

82 —( START )

84 — MEASURE BATTERY TEMPERATURE

CALCULATE Vmin VALUES FOR EACH COMBINATION OF THE DIFFERENT LOADS —86

88 — STORE Vmin VALUES IN THE FLASH DRIVER

*80*

90 — SET THE FLASH CURRENT

92 — START FLASH DEVICE ⟶ END ⟍94

95

98 — INPUT ACTIVITY SIGNALS

SELECT CORRESPONDING Vmin VALUE AS A
FUNCTION OF THE ACTIVE ACTIVITY SIGNALS —100

102 — END FLASH? — Y → END ⟍104

N

106 — INPUT BATTERY VOLTAGE

108 — BATTERY VOLTAGE >
CORRESPONDING Vmin VALUE? — Y

N

110 — BATTERY VOLTAGE =
CORRESPONDING Vmin VALUE? — N → ALERT PROCESSOR ⟍114

Y

112 — REDUCE FLASH CURRENT UNTIL BATTERY
VOLTAGE > CORRESPONDING Vmin VALUE

END ⟍116

*FIG.4*

FIG.5

**EP 2 224 286 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080037979 A
- US 20080014997 A
- US 20080164847 A